# EUROPÄISCHE PATENTSCHRIFT

(11) **EP 0 440 888 B1**
(45) Veröffentlichungstag und Bekanntmachung des Hinweises auf die Patenterteilung: **14.07.1993**
(21) Anmeldenummer: 90121100.3
(22) Anmeldetag: 03.11.1990
(51) Int. Cl.: B29B 7/48

(54) **Mehrwelliger Dünnschichtreaktor**
Thin layer reactor with reveral shafts
Réacteur à couches minces avec plusieurs arbres

(30) Priorität: 24.01.1990 DE 4001986
(43) Veröffentlichungstag der Anmeldung: 14.08.1991
(73) Patentinhaber: HERMANN BERSTORFF Maschinenbau GmbH, D-30627 Hannover (Kleefeld) (DE)
(72) Erfinder: Chszaniecki, Siegfried, W-3000 Hannover 1 (DE)

(56) Entgegenhaltungen:
- EP-A- 0 208 139
- CH-A- 371 667
- DE-A- 2 521 774
- DE-C- 3 503 817
- GB-A- 251 524
- GB-A- 2 084 037
- US-A- 2 754 542

## Beschreibung

Die Erfindung betrifft einen mehrwelligen Dünnschichtreaktor gemäß dem Oberbegriff von Patentanspruch 1.

Eine Einrichtung dieser Gattung ist aus der EP-OS 0 208 139 bekannt. In dieser Schrift wird ein Abdichtungssystem für die einzelnen miteinander kämmenden Förderwellen des sogenannten Dünnschichtreaktor beschrieben. Der gezeigte Reaktor weist stationäre miteinander Kämmende Förderwellen auf. Die Förderwellen werden durch nach oben in ein Getriebe geführte Wellenenden angetrieben. Der Dünnschichtreaktor führt einen Entgasungsvorgang der Polymere durch. Zu diesem Zweck wird die mittig zwischen den kreisförmig angeordneten Förderwellen gebildete Kammer oben und unten abgeschlossen und einem Unterdruck ausgesetzt.

Es ist bei derartigen Einrichtungen besonders vorteilhaft, daß auf dem der zentralen Entgasungskammer zugewandten Umfangsbereich der Förderwellen sich sehr dünne Schmelzeschichten ausbilden. Die Dicke der Schmelzeschichten ist abhängig von dem Abstand zwischen den einzelnen miteinander Kämmenden Förderwellen. Das zu entgasende Behandlungsgut in Schmelzeform wird in den Reaktor auf die Außenseite der Kreisförmig angeordneten und miteinander kämmenden Förderwellen aufgegeben. Die Förderwellen nehmen durch ihre Rotation und ihre Oberflächengeometrie Schmelze mit in die mittige Entgasungskammer, in der die flüchtigen Bestandteile in den dünnen Schmelzeschichten durch die Ausbildung eines Unterdruckes an die Schmelzeoberfläche diffundieren und abgesaugt werden.

Derart gestaltete Dünnschichtreaktoren besitzen aufgrund der Ausbildung dieser dünnen Schmelzeschichten hervorragende Möglichkeiten flüchtige Bestandteile bis auf wenige ppm's aus einer Schmelze oder einer Flüssigkeit zu entfernen. Insbesondere ist jedoch durch die parallele Anordnung der insgesamt miteinander kämmenden Wellen sichergestellt, daß die gesamte Schmelze zu dünnen Schmelzeschichten ausgebreitet wird und somit flüchtige Bestandteile sehr gut daraus zu entfernen sind.

Es hat sich bei derartigen Dünnschichtreaktoren als besonders schwierig erwiesen, die einzelnen miteinander kämmenden, stationären Förderwellen gegenüber dem Antriebsorgan abzudichten, um den Unterdruck bis zu 10⁻⁴ im mittigen Entgasungsraum aufrecht zu erhalten.

Zu diesem Zweck sind komplizierte Dichtungssysteme erforderlich, wie im einzelnen in der obigen EP-OS 0 208 139 beschrieben wird. Außerdem ist ein kompliziertes Getriebe für die exakte gleichsinnige Drehung der in Kreisform angeordneten, miteinander kämmenden Förderwellen erforderlich, wie dargestellt in der DE-PS 30 30 541.

Weiterhin ist es bei einem Dünnschichtreaktor dieser Gattung erforderlich, das die kreisförmig angeordneten Förderwellen umschließende Gehäuse oszilierend zu drehen, um ein Festbacken von Schichten des Verarbeitungsgutes an der Innenwandung des Gehäuses zu vermeiden (siehe DE-PS 35 13 536).

Es ist die Aufgabe der vorliegenden Erfindung einen Dünnschichtreaktor der Gattung, wie im Oberbegriff des ersten Patentanspruchs offenbart, so weiterzubilden, daß komplizierte Dichtungssysteme der einzelnen Förderwellen nicht mehr benötigt werden. Weiterhin soll der Antrieb der einzelnen Förderwellen wesentlich vereinfacht werden. Auch soll eine Drehung des Gehäuses zwecks Vermeidung von Materialablagerungen an der Gehäuseinnenwandung sich erübrigen.

Diese Aufgabe wird durch den Dünnschichtreaktor nach Patentanspruch 1 gelöst.

Durch die Anordnung von Abschnitten eines Planetwalzenextruders, der als solcher aus der DE-OS 29 05 717 bekannt ist, wird in sehr einfacher aber wirkungsvoller Weise erreicht, daß eine beliebige Anzahl von Förderwellen in einem geschlossenen Entgasungsraum mit absolut gleichmäßiger Umfangsgeschwindigkeit in eine Rotationsbewegung gesetzt und gleichzeitig in dem Raum umlaufen und dabei die Gehäuseinnenwandung abstreifen.

Die stationären und zusätzlich noch drehenden Wellen gemäß dem Stand der Technik gegen einen hohen Unterdruck abzudichten, ist sehr umständlich und erfordert einen hohen konstruktiven und materiellen Aufwand, was durch einen kurzen Blick auf das Dichtsystem in der EP-OS 0 208 139 deutlich wird.

Die erfindungsgemäße Anordnung von Planetwalzenextruderabschnitten für diesen Zweck löst alle Probleme auf eine sehr einfache und wirtschaftliche Weise, weil nur noch eine Welle, nämlich die Antriebswelle für die Zentralspindel, aus dem Entgasungsraum heruasgeführt und somit abgedichtet werden muß.

Es wird erfindungsgemäß ein kompliziertes Getriebe für die Drehbewegung der Förderwellen eingespart, ohne daß die Funktion des Dünnschichtreaktors in irgendeiner Weise beeinträchtigt wird. Auf eine sehr einfache Weise wird sichergestellt, daß alle Förderwellen des Reaktors sich absulut synchron und gleichmäßig durch die kraftschlüssige obere und/oder untere Verbindung der Förderwellen mit den Planeten der Planetwalzenextruderteile drehen. Zusätzlich zu ihrer Rotation werden die Förderwellen durch die verzahnten Zentralspindelabschnitte auf der kreisförmigen Umlaufbahn um die Zentralspindel herumgeführt. Durch den kreisförmigen Umlauf an der Gehäuseinnenwandung entlang, wird das Gehäuse gereinigt. Eine Drehung des Gehäuses, wie beschrieben in der DE-PS 35 13 536 erübrigt sich somit, wodurch der Dünnschichtreaktor wesentlich wirtschaftlicher herstellbar ist.

Darüber hinaus erfährt die Schmelze in den Planetwalzenextruderabschnitten eine zusätzliche Homogenisierung durch die abrollende Beaufschlagung zwischen den verzahnten Planeten und der verzahnten Gehäuseinnenwand auf der einen Seite und der Zentralspindel auf der anderen Seite. Die axiale Länge der jeweils einzusetzenden Planetwalzenextruderabschnitte ist abhängig von der Schmelzeviskosität bzw. den -eigenschaften des Produktes.

Die Planetwalzenextruderabschnitte können auch nur eine Getriebefunktion übernehmen, ohne jeglichen Homogenisiereffekt. In einem solchen Fall kann der Abschnitt sehr kurz gehalten werden.

Vorteilhaft ist die Verbindung der Zentralspindel des oberen Planetwalzenextruderabschnittes mit der Zentralspindel des unteren Abschnittes mittels einer im Durchmesser geringer bemessenen Welle, so daß ein großer Entgasungsraum zwischen beiden Abschnitten gebildet wird. Die Zentralspindel des oberen und unteren Planetwalzenextruderabschnittes und die Welle kann aus einem Stück hergestellt werden, so daß beide Planetwalzenextruderabschnitte mit den dazwischen angeordneten Förderwellen absolut synchron umlaufen. Der Antrieb des Reaktors für die Drehung und den Umlauf der Förderwellen wird an einer mit der oberen Zentralspindel verbundenen Welle angeschlossen.

Bei sehr großen Reaktoren kann es jedoch vorteilhaft sein, die oberen und unteren Zentralspindelteile mit einer die Entgasungsbohrung aufnehmenden Welle beispielsweise zu verschrauben.

Mittig in dem oberen Zentralspindelabschnitt ist eine Bohrung eingebracht, die mit der Entgasungsbohrung der Welle und mit einer Einrichtung zum Erzeugen eines Unterdruckes in Verbindung steht.

Bei einer einfacheren, preisgünstiger herzustellenden Ausführungsform werden die Förderwellen des Reaktors nur einseitig durch die Planeten eines Planetwalzenextruderabschnittes geführt und angetrieben. Bei dieser Ausführungsform werden die nicht durch Planeten geführten Enden der Förderwellen in einer ringförmigen Vertiefung eines unteren Anschlußflansches geführt. Bei dieser Ausführungsform laufen die Förderwellen um einen zentralen, konusartig ausgebildeten Verdrängerkörper.

Ausführungsbeispiele des erfindungsgemäßen Mehrwellendünnschichtreaktors werden in den Zeichnungen dargestellt und nachfolgend erläutert.

Es zeigen:

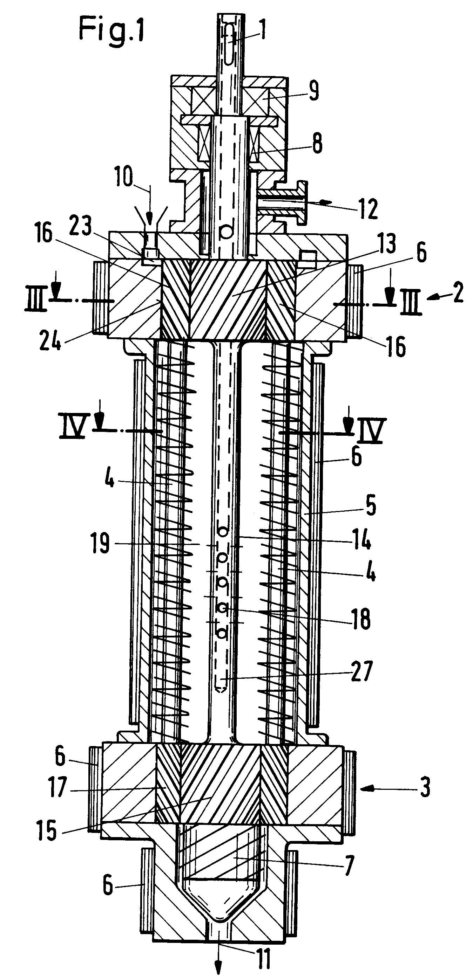

- Fig. 1: einen Längsschnitt durch einen Dünnschichtreaktor.
- Fig. 2: einen Längsschnitt durch eine weitere Ausführungsform des Dünnschichtreaktors.
- Fig. 3: einen Querschnitt gemäß der Linie III-III in Fig. 1.
- Fig. 4: einen Querschnitt gemäß der Linie IV-IV in Fig. 1.

An einer Antriebswelle 1 mit einer Paßfeder ist ein oberer Planetwalzenextruderabschnitt 2 angeordnet. Eine Zentralspindel 13 ist mittels einer Welle 14 mit einer unteren Zentralspindel 15 eines unteren Planetwalzenextruderabschnittes 3 verbunden.

Die in dem Reaktorgehäuse 5 angeordneten Förderwellen 4 sind jeweils mit an den Planetspindeln 16 und 17 angeformten, nicht gezeigten, mit einem Gewinde versehenen Bolzen verschraubt. Der obere und untere Planetwalzenextruderabscnitt 2 und 3 und die Förderwellen 4 sind in dem Gehäuse 5 angeordnet. Außen um das Gehäuse 5 sind Heizkörper 6 angebracht, um die Schmelzetemperaturen beeinflussen zu können. An der unteren Zentralspindel 15 ist ein Förderstege aufweisendes Austragsschneckenteil 7 befestigt, um einen Werkzeugdruck aufzubauen und eine vaccumdichte Abdichtung des Entgasungsraumes 19 nach unten hin zu gewährleisten.

Die Antriebswelle 1 ist in einem Axiallager 9 gelagert und mittels der Wellendichtung 8 nach oben abgedichtet.

Die Schmelze wird mit einem Druck durch die Einspeiseöffnung 10 in den Reaktor gefördert, wodurch der Entgasungsraum gleichzeitig nach oben abgedichtet wird.

Unterhalb der Einspeiseöffnung 10 und etwa mittig über der Trennfuge zwischen den Planeten 16 und der Gehäuseinnenwandung 24 des Planetwalzenextruderabschnittes 2, ist ein Ringkanal 23 angeordnet, der für eine Rundumverteilung der eingegebenen Schmelze vorteilhaft ist. Die Verteilung der Schmelze wird darüber hinaus durch mehrere über den Ringkanal 23 angeordnete Einspeiseöffnungen 10 begünstigt.

Die Welle 1 weist mittig eine axiale Bohrung 27 auf, an die über den Anschlußflansch 12 eine, einen Unterdruck erzeugende nicht gezeigte Einrichtung angeschlossen ist. In die Welle 1 sind Querbohrungen 18 eingebracht, die mit der axialen Längsbohrung 27 in Verbindung stehen, so daß in dem Entgasungsraum 19 ein Unterdruck erzeugt werden kann.

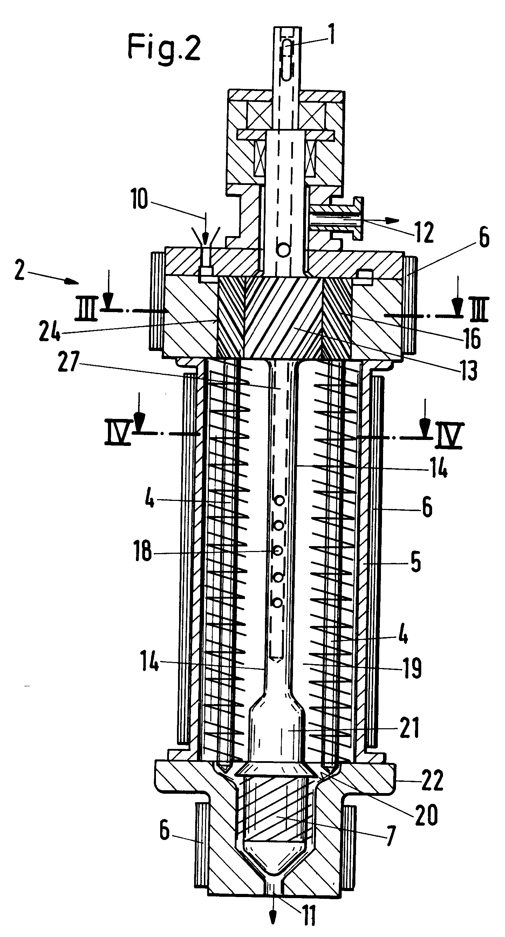

Bei der in Fig. 2 gezeigten Ausführungsform sind die Förderwellen 4 unten nicht mit Planetspindeln verbunden, sondern frei geführt in einer in den Abschlußflansch 22 eingebrachten ringförmigen Vertiefung 20. In das untere Ende der Welle 14 ist ein etwa konusartig ausgebildeter Verdrängerkörper 21 eingeschraubt.

Nachfolgend wird die Funktionsweise des Dünnschichtreaktors beschrieben.
5Durch die Schmelzeeinspeiseöffnungen 10 gelangt z.B. eine Polyäthylenschmelze in den Ringkanal 23 und von dort zwischen die Innenwandung 24, den Planeten 16 und der Zentralspindel 13. Durch die unter Druck eingespeiste Schmelze wird der Entgasungsraum 19 nach oben abgedichtet.

Durch die in Drehbewegung gesetzte schrägverzahnte Zentralspindel 13 rollen die schrägverzahnten Planetspindeln 16 auf der verzahnten Gehäuseinnenwandung 24 ab. Die Planetspindeln 16 rotieren (Pfeil 29) und führen gleichzeitig eine umlaufende Bewegung (Pfeil 30) um die Zentralspindel 13 aus.

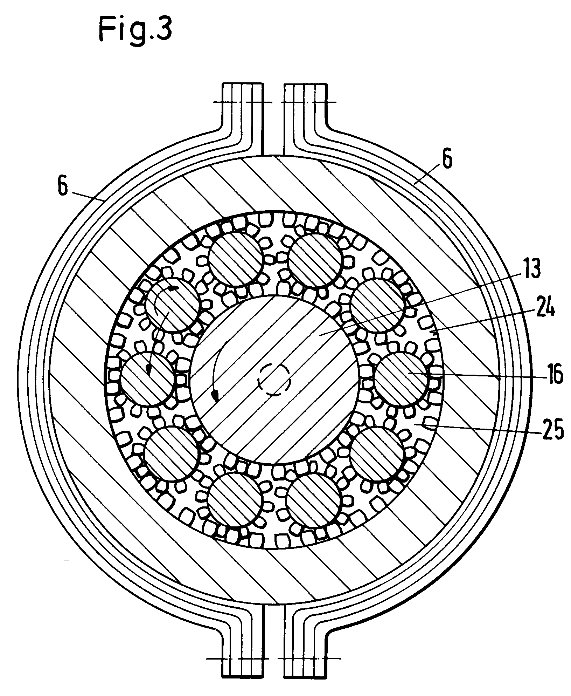

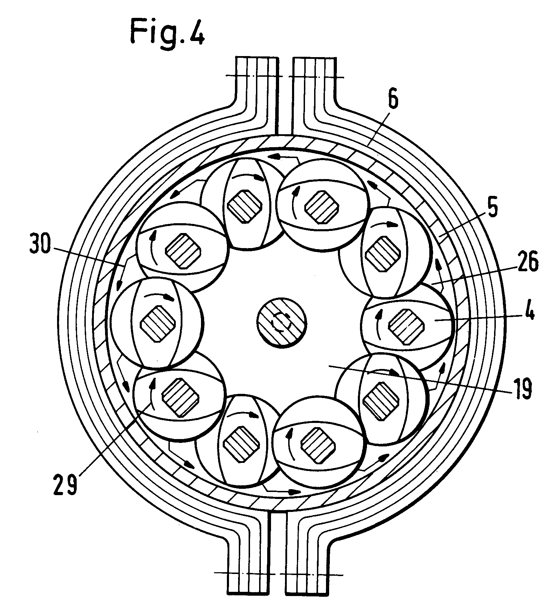

Die Schmelze gelangt über den Ringkanal 23 in die Zwischenräume 25 (Fig. 3) und wird nach unten auf die Außenseite der Förderwellen 4 in die Zwischenräume 26 (Fig. 4) gefördert.

Es wird jeweils eine gewisse Schmelzemenge von den rotierenden Förderwellen 4 in den Entgasungsraum 19 mitgeschleppt. Es bilden sich auf den Förderwellen dünne Schmelzeschichten aus. Die Dicke der Schmelzeschichten auf dem Umfangsteil der Förderwellen 4, der dem Entgasungsraum 1 zugewandt ist, wird bestimmt durch den Abstand zwischen den sich gegenseitig abstreichenden Knetelementen oder Förderstegen der Förderwellen 4. Es ist somit jederzeit möglich, den erfindungsgemäßen Dünnschichtreaktor durch ein Austauschen der Förderwellen 4 (mit einer anderen Steg- bzw. Knetscheibengeometrie) mit geringeren Abständen zueinander an unterschiedliche Materialviskositäten anzupassen.

Aus einer hochmolekularen und hochviskosen Schmelze lassen sich bekanntlich sehr schwer flüchtige Bestandteile entfernen. Nur wenn extrem dünne Schichten in großer Flächer (Oberfläche aller Förderwellenumfangsteile, die dem Entgasungsraum zugewandt sind) geschaffen werden können, ist eine schnelle und wirtschaftliche Entgasung möglich.

Durch die Wahl der Geometrie der Förderwellen ist die Förderwirkung einstellbar. Die Schmelze wird nach unten gefördert und gelangt in den zweiten Planetwalzenabschnitt 3.

Durch eine nicht gezeigte Vacuumpumpe, die an den Entgasungsflansch 12 angeschlossen wird, erfolgt der Aufbau eines hohen Unterdruckes (über die Bohrung 27 und den Öffnungen 18 in der Welle 14) in dem Entgasungsraum 19.

Durch die Schmelze in der Austragsschnecke 7 wird nach unten hin eine Abdichtung geschaffen. Die Schmelze wird durch die Austragsöffnung 11 mit einem Druck ausgestoßen, um z.B. einem Wasserringgranulator zugeführt zu werden.

Der Dünnschichtreaktor wird vorzugsweise für die Polymerisation, die Polyaddition und die Polykondensation von Kunststoffen eingesetzt, weil bei derartigen Prozessen flüchtige, sich in der Schmelze befindende Bestandteile soweit wie nur irgendmöglich entfernt werden müssen. Der Dünnschichtreaktor ist jedoch auch in umgekehrter Arbeitsweise einsetzbar, z.B. wenn es zweckmäßig ist, unter flüssige Stoffe ein Gas einzumischen, um z.B. bestimmte chemische Reaktionen durchzuführen. In den Entgasungsraum 19 wird dann eine gasförmige Substanz gepreßt, die sich auf den dünnen, flüssigen Schichten absetzt und durch die Drehung der Förderwellen 4 in die Flüssigkeit eingearbeitet wird.

## Patentansprüche

1. Mehrwelliger Dünnschichtreaktor zur kontinuierlichen Herstellung hochmolekularer Polymere, thermoplastische, zu entgasende Kunststoffschmelzen oder andere zu entgasende oder zu begasende, flüssige Massen, mit einem Gehäuse (5), welches einen an eine Unter- oder Überdruckquelle anschließbaren Raum umschließt, in dem mehrere antreibbare, achsparallele, miteinander kämmende Förderwellen (4) drehbar gelagert sind, wobei die Förderwellen in Kreisform um den Raum herum angeordnet sind, wobei jede Förderwelle mit den zu ihren beiden Seiten angeordneten Förderwellen kämmt und wobei sämtliche Förderwellen gleichsinnig antreibbar sind, so daß sich auf den dem Entgasungsraum (19) zugewandten Seiten der Förderwellen dünne Schichten des Behandlungsgutes ausbilden,
**dadurch gekennzeichnet,**
daß der Antrieb der Förderwellenwellen (4) durch einen oberen und/oder unteren,
eine Rotation (29) und gleichzeitig einen kreisförmigen, abstreifenden Umlauf (30) der Wellen (4) an der Gehäuseinnenwandung entlang bewirkenden Planetwalzenextruderabschnitt (2, 3) gebildet wird, und
daß die Förderwellen (4) kraftschlüssig mit den Planeten (16, 17) der Planetwalzenextruderabschnitte (2, 3) verbunden sind.

2. Mehrwelliger Dünnschichtreaktor nach Anspruch 1,
**dadurch gekennzeichnet,**
daß die Planetwalzenextruderschnitte (2, 3) gebildet werden durch eine verzahnte Zentralspindel (13, 15) mit darum herum in gleichmäßigen Abständen zueinander angeordneten, im Durchmesser geringer bemessenen, eine Verzahnung aufweisenden Planetspindeln (16, 17), und
daß die Planetspindeln (16, 17) mit einer Innenverzahnung (24) eines Gehäuseteiles kämmend ausgebildet sind.

3. Mehrwelliger Dünnschichtreaktor nach den Ansprüchen 1 und 2,
**dadurch gekennzeichnet,**
daß die Zentralspindel (13, 15) des oberen und/oder unteren Planetwalzenextruderabschnittes (2, 3) als im Durchmesser geringer bemessene Welle (4) durch die Längsmittelachse des Entgasungsraumes (10) geführt und mit dem Zentralspindelteil (15, 13) des unteren und/oder oberen Planetwalzenextruderabschnittes (2, 3) verbunden ist, daß die Zentralspindeln (2, 3) und die Welle (4) mittig axial mit einer Längsbohrung (27) ausgebildet sind,
daß die Längsbohrung (27) an ihrem einen Ende über einen Flansch (12) mit einer, einen Unterdruck erzeugenden Einrichtung verbunden ist und an ihrem entgegengesetzten Ende mit seitlich in den Entgasungsraum (19) führende Querbohrungen (18) ausgebildet ist, und
daß an die Zentralspindel (13, 15) ein Antrieb angeordnet ist.

4. Mehrwelliger Dünnschichtreaktor nach den Ansprüchen 1 bis 3,
**dadurch gekennzeichnet,**
daß die Zentralspindel (13) des oberen Planetwalzenabschnittes (2), die im Durchmesser geringer bemessene, mit beiden Zentralspindeln (13, 15) verbundene Welle (4) und die Zentralspindel (15) des unteren Planetwalzenextruderabschnittes (3) aus einem Stück ausgebildet, oder aus einer Hohlwelle (14) mit daran beidendig befestigten Zentralspindelteilen (13, 15) gebildet wird.

5. Mehrwelliger Dünnschichtreaktor nach den Ansprüchen 1 bis 4,
**dadurch gekennzeichnet,**
daß die Förderwellen (4) an einem oder beiden Enden eine zentrale Bohrung mit einem Innengewinde aufweisen , und
daß die Planeten (16, 17) mit einem, axial daran angeformten in das Innengewinde der Förderwellen (4) eingreifenden Bolzen ausgebildet sind.

6. Mehrwelliger Dünnschichtreaktor nach den Ansprüchen 1 und 5,
**dadurch gekennzeichnet,**
daß auf einem durchgehenden, vieleckigen Dorn unten die Planetenteile (17) daran anschließend einzelne Förderwellenteile und oben Planetenteile (16) angeordnet sind.

7. Mehrwelliger Dünnschichtreaktor nach Anspruch 1,
**dadurch gekennzeichnet,**
daß an der Oberseite des Gehäuses eine oder mehrere über den Umfang verteilte Schmelzeeinspeiseöffnungen (10) angeordnet sind,
daß die Öffnungen (10) mit einem etwa über der Trennfuge zwischen den rotierenden Planeten (16) und der Gehäuseverzahnung (24) geführten Ringkanal (23) in Verbindung stehen.

8. Mehrwelliger Dünnschichtreaktor nach Anspruch 1,
**dadurch gekennzeichnet,**
daß der Zentralspindel (15) des unteren Planetwalzenabschnittes (3) oder dem unteren Ende der durch den Entgasungsraum geführten Welle (14) ein Förderstege aufweisendes, eine Schmelzeabdichtung bewirkendes Schneckenteil (7) kraftschlüssig zugeordnet ist.

## Claims

1. Multi-shaft thin film reactor for the continuous production of polymers of a high molecular weight, thermoplastic melt to be devolatilized, or liquids to be devolatilized or gassed, with a housing (5) which encloses an area that can be connected to a vacuum or overpressure source and in which several intermeshing conveying shafts with parallel axes that can be driven are rotatably supported, the conveying shafts being arranged in a circle around that area with each conveying shaft intermeshing with the conveying shafts adjoining it on either side, and all conveying shafts being designed for being driven in the same direction so that thin films of the product to be treated build up on the sides of the conveying shafts facing the devolatilizing area (19),
**characterized in that**
the drive of the conveying shafts (4) is carried out by means of an upstream and/or downstream planetary gear extruder section (2, 3), which effects a rotation (29) and, simultaneously, a circular, scraping revolution (30) of the shafts (4) along the inner housing wall, and
that the conveying shafts (4) are connected in a non-positive way with the planetary elements (16, 17) of the planetary gear extruder sections (2, 3).

2. Multi-shaft thin film reactor as per claim 1,
**characterized in that**
the planetary gear extruder sections (2, 3) are composed of a toothed main screw (13, 15) with toothed planetary gears (16, 17) of a smaller diameter arranged around it at identical distances to each other, and
that the planetary gears (16, 17) are designed such as to intermesh with an internal toothing (24) of a housing section.

3. Multi-shaft thin film reactor as per claims 1 and 2,
**characterized in that**
the main screw (13, 15) of the upstream and/or downstream planetary gear extruder section (2, 3) is a shaft (4) of a smaller diameter that is guided along the longitudinal centre axis of the devolatilizing area (10) and connected with the main screw part (15, 13) of the upstream and/or downstream planetary gear extruder section (2, 3),
that the main screws (13, 15) and the shaft (4) are provided with a longitudinal bore (27) in the centre axis,
that the longitudinal bore (27) is connected via a flange (12) with a vacuum generating device on one end and provided with cross bores (18) laterally leading into the devolatilizing area (19) on the opposite end, and
that a drive is arranged at the main screw (13, 15).

4. Multi-shaft thin film reactor as per claims 1 to 3,
**characterized in that**
the main screw (13) of the upstream planetary gear extruder section (2), the shaft (4) which has a smaller diameter and is connected with the two main screws (13, 15), and the main screw (15) of the downstream planetary gear extruder section (3) are made of one piece or of a hollow shaft (14) with main screw sections (13, 15) fastened to it at both ends.

5. Multi-shaft thin film reactor as per claims 1 to 4,
**characterized in that**
the conveying shafts (4) are provided with a central bore with internal thread at one or both ends, and
that the planetary elements (16, 17) are designed with an axially annexed bolt that catches in the internal thread of the conveying shafts.

6. Multi-shaft thin film reactor as per claims 1 and 5,
**characterized in that**
downstream planetary elements (17) followed by individual conveying shaft parts and upstream planetary elements (16) are arranged on a continuous polygonal shaft.

7. Multi-shaft thin film reactor as per claim 1,
**characterized in that**
one or several melt feed openings (10) are distributed over the circumference on the upper side of the housing,
that the openings (10) communicate with an annular channel (23) that is arranged approximately above the parting joint between the rotating planetary elements (16) and the toothing of the housing (24).

8. Multi-shaft thin film reactor as per claim 1,
**characterized in that**
the main screw (15) of the downstream planetary gear extruder section (3) or the lower end of the shaft (14) that leads through the devolatilizing area is assigned a screw element (7) which effects a melt seal, is provided with conveying flights and connected in a non-positive way.

## Revendications

1. Réacteur travaillant à couches minces à arbres multiples pour la fabrication en continu de polymères à haut poids moléculaire, de masses fondues thermoplastiques à dégazer ou d'autres substances liquides à dégazer ou à gazer, avec un carter 5 qui entoure une chambre qui peut être connectée à un dispositif à faire le vide ou à un dispositif à surpression et dans lequel plusieurs arbres transporteurs (4) parallèles à l'axe qui peuvent être entraînés et qui s'engrènent sont supportés de façon rotative, les arbres transporteurs étant arrangés circulairement autour de la chambre, chaque arbre transporteur s'engrenant avec les arbres transporteurs arrangés sur les deux côtés et tous les arbres transporteurs pouvant être entraînés dans le même sens de sorte à former des couches minces de la matière à traiter sur les faces des arbres transporteurs donnant sur la chambre de dégazage (19),
**caractérisé**
en ce que l'entraînement des arbres transporteurs (4) est formé par une section d'extrudeuse planétaire (2, 3) supérieure et/ou inférieure causant une rotation (29) et en même temps un mouvement circulaire et raclant (30) des arbres (4) le long de la paroi intérieure du carter et
en ce que les arbres transporteurs sont reliés par adhérence avec les planètes (16, 17) des sections d'extrudeuse planétaire (2, 3).

2. Réacteur à arbres multiples travaillant à couches minces selon revendication 1,
**caractérisé**
en ce que les sections d'extrudeuse planétaire (2, 3) sont formées par une broche centrale dentée (13, 15) autour de laquelle sont arrangées des broches planétaires (16, 17) à une distance régulière entre elles qui ont un diamètre réduit et présentent une denture et
en ce que les broches planétaires (16, 17) s'engrènent avec la denture intérieure (24) d'une partie du carter.

3. Réacteur à arbres multiples travaillant à couches minces selon les revendications 1 et 2,
**caractérisé**
en ce que la broche centrale (13, 15) de la section supérieure et/ou inférieure d'extrudeuse planétaire (2, 3) est guidée en tant qu'arbre à diamètre réduit (4) le long de l'axe central de la chambre de dégazage (10) et est connectée à la partie de la broche centrale (15, 13) de la section inférieure et/ou supérieure d'extrudeuse planétaire (2, 3), en ce que les broches centrales (2, 3) et l'arbre (4) sont pourvus au centre d'un alésage longitudinal (27), en ce que l'alésage longitudinal (27) est connecté avec une extrémité à un dispositif à faire le vide par l'intermédiaire d'une bride (12) et que l'autre extrémité est pourvue d'alésages transversaux (18) menant latéralement dans la chambre de dégazage (19) et en ce que la broche centrale (13, 15) est pourvue d'un entraînement.

4. Réacteur à arbres multiples travaillant à couches minces selon les revendications 1 à 3,
**caractérisé**
en ce que la broche centrale (13) de la section d'extrudeuse planétaire supérieure (2), l'arbre (4) ayant un diamètre réduit et relié aux deux broches centrales (13, 15) et la broche centrale (15) de la section d'extrudeuse planétaire inférieure (3) sont formés d'une pièce ou d'un arbre creux (14) avec des éléments de broche centrale (13, 15) fixés sur les deux extrémités.

5. Réacteur à arbres multiples travaillant à couches minces selon les revendications 1 à 4,
**caractérisé**
en ce que les arbres transporteurs (4) présentent sur une ou les deux extrémités un alésage central avec filet intérieur, et
en ce que les planètes (16, 17) sont pourvues d'une tige axiale s'engrenant avec le filet intérieur des arbres transporteurs (4).

6. Réacteur à arbres multiples travaillant à couches minces selon les revendications 1 et 5,
**caractérisé**
en ce que sur un arbre continu et polygonal sont arrangés en bas des éléments planétaires (17) et, ensuite, quelques éléments d'arbre transporteur (13) et en haut des éléments planétaires (16).

7. Réacteur à arbres multiples travaillant à couches minces selon revendication 1,
**caractérisé**
en ce qu'une ou plusieurs ouvertures d'alimentation en masse fondue (10) sont arrangées sur la circonférence de la face supérieure du carter,
en ce que les ouvertures (10) sont reliées à un canal annulaire (23) se trouvant à peu près au-dessus de la ligne de séparation entre les planètes en rotation (16) et la denture du carter (24).

8. Réacteur à arbres multiples travaillant à couches minces selon revendication 1,
**caractérisé**
en ce que la broche centrale (15) de la section inférieure d'extrudeuse planétaire (3) ou l'extrémité inférieure de l'arbre (14) guidé à travers la chambre de dégazage est connectée par adhérence avec une section de vis (7) comprenant des filets de transport et assurant une étanchéification par masse fondue.
